# EUROPEAN PATENT SPECIFICATION

(11) **EP 3 558 851 B1**
(45) Date of publication and mention of the grant of the patent: **20.07.2022**
(21) Application number: 16826314.3
(22) Date of filing: 20.12.2016
(51) Int. Cl.: B65G 15/60

(54) **CONVEYOR BELT DEFLECTION APPARATUS**
FÖRDERBANDABLENKUNGSVORRICHTUNG
APPAREIL DE DÉVIATION DE COURROIE TRANSPORTEUSE

(43) Date of publication of application: 30.10.2019
(73) Proprietor: Sandvik Intellectual Property AB, 811 81 Sandviken (SE)
(72) Inventor: KRIBITZ, Gerald, 8723 Kobenz (AT)
(74) Representative: Sandvik
(86) International application number: PCT/EP2016/081973
(87) International publication number: WO 2018/113929

(56) References cited:
- EP-A1- 3 015 601
- WO-A1-2004/067412
- DE-C- 746 881
- JP-A- S5 992 808
- JP-A- 2002 193 417
- JP-A- 2016 084 224
- JP-A- 2016 175 726
- US-A- 3 184 038

## Description

### Field of invention

The present invention relates to conveyor belt deflection apparatus for deflecting a conveyor belt suitable to transport material between locations and in particular, although not exclusively, to conveyor belt deflection apparatus formed from sections that are moveable relative to one another to change a relative orientation of the conveyor belt within the apparatus.

### Background art

A variety of different mechanisms and techniques have been implemented to transport extracted bulk material from a first to a second location. For example, stationary conveying devices are commonly used to transport material within mine tunnels. Such static devices are suitably gradient and height adjustable via support legs and anchorage struts that support the conveyor frame within the mine tunnel. A mine environment typically involves tunnels extending in different orientations and in order to convey material from one tunnel to the next, moveable conveying devices have been proposed to sit at the junction and effectively 'bridge' the gap between the stationary conveyors.

WO 2014/191195 discloses a belt deflection device having a first section and an articulating second section. A number of belt deflection rollers are mounted at a frame part of each section and at a turning device acts on the second section to provide articulation and hence a desired deflection of the belt when traveling from the first to the second section.

JPS5992808 discloses an apparatus according to the preamble of claim 1 and a belt conveyer for transporting articles, the conveyor has a belt being twisted in the midway thereof in three dimensions, with a turning belt pulley disposed underneath to change the transport direction.

Further belt deflection devices are described in JP 2016084224; JP 2000168929; CN 2543903; JP 2002249214; CA 2,912,444 and US 9,457,958. However, existing belt deflectors are limited with regard to any one of their ease of installation and mounting within a confined region such as a mine; the control of the belt with regard to belt tension, axial alignment of the belt over the rollers and stress in the belt; the available range of belt adjustment between the different sections of the deflector device and hence an overall adjustability of the device to form an effective 'bridge' between an upstream and a downstream conveyor system within which the deflector device is to be positioned for transportation of material. Accordingly, what is required is an improved belt deflector to address these problems.

### Summary of the Invention

It is one objective of the present invention to provide deflection apparatus for a conveyor belt adapted to manipulate or translate an orientation of the belt extending in a first longitudinal direction to a second longitudinal direction, with the latter direction being angled relative to the first. In particular, it is a specific objective to provide belt deflector apparatus configured for adjustable translation of the belt so as to provide an apparatus that is adaptive to satisfy a broad range of different user requirements and in particular to be compatible with a pre-existing geometry at which bulk material is required to be conveyed from a first region to a second region.

One specific objective is to provide a three-dimensional adaptable conveyor belt support frame capable of being positioned at a region within a material conveying system that may typically include additional moveable or stationary belt conveyors. It is a yet further objective to provide belt deflection apparatus suitable for positioning at a tunnel junction within a mine formed by a first tunnel extending in a first direction that interfaces with a second tunnel extending in a second and different direction with regard to a horizontal plane and/or a vertical plane.

The above objectives are achieved via three-dimensional adaptable belt deflection apparatus in which an endless conveyor belt is supported by a set of belt deflector rollers that are in turn mounted at a modular constructed rigid frame assembly with sections of the frame being moveable relative to one another. In particular, the frame sections each mount respectively the belt deflector rollers such that movement of parts of at least some of the frame sections is configured to provide a corresponding movement of the rollers that, in turn, provides a deflection of the belt in three dimensions. According to a specific implementation, the present belt deflection apparatus comprises a first section supporting the belt and a second section supporting the belt in which the second section may be manipulated according to a variety of different translations such that an orientation of the belt extending in the second section is adjustable relative to an orientation of the belt extending in the first section. According to the above objectives, the present belt deflection apparatus comprises at least two translational movements including a first slewing in a horizontal plane of a second section relative to the first section and a second rotation or pivoting of the second section relative to the first section in a vertical plane. Moreover, the subject invention may provide translational movement of the belt at the second section relative to that in the first section according up to five primary translational modes. Accordingly, the present apparatus is adapted for positioning at a mine tunnel junction to facilitate material conveying from a first direction to a second direction in which two mine tunnels may extend at any angle or orientation relative to one another in both a horizontal and a vertical plane.

In particular, and according to a first aspect of the present invention there is provided a conveyor belt deflection apparatus according to claim 1.

Optionally, the apparatus further comprises a third belt adjuster being different to the second belt adjuster to raise and lower in a vertical plane the belt at the second section relative to the belt at the first section. Optionally, the apparatus may further comprise a fourth belt adjuster to adjust laterally a position of the belt extending at the second section in a horizontal plane relative to the first end roller and in a direction aligned with the first longitudinal direction so as to align the belt at the second section relative to the first end roller. According to a further aspect, the apparatus may further comprise a fifth belt adjuster to adjust an angle at which a generally upward facing material contact surface of the belt at the second section extends in a widthwise direction of the belt at the second section relative to a horizontal plane. Preferably, the first, second, third, fourth and fifth belt adjusters are all separate and additional relative to one another. Such an arrangement is advantageous to provide a geometrically adjustable belt deflector apparatus in which the belt deflector pulleys may be adjusted positionally relative to one another whilst maintaining the belt tracking under control and in turn avoiding belt misalignment between any two neighbouring belt pulleys. Such an apparatus is capable of being installed and utilised within a broad range of geometrical constraints including in particular reduced width of height environments such as would be encountered in an underground mine.

The present invention is compatible to utilise an endless continuous belt that is advantageous in a number of respects. In particular, the present apparatus may comprise and may be compatible with a single drive unit to drive the belt in forward and/or reverse directions over the deflector pulleys with the drive unit being located at or remote from the apparatus. In particular, according to one implementation, a single drive unit may be located at an initial loading or a discharge end of the first or second sections and in particular preferably at a surface adjacent to the exit end of an underground mine. Such an arrangement is advantageous to minimise maintenance due to reduced dust contamination, to enhance cooling of the drive motor and to increase safety within the mine.

The present invention preferably utilised rigid modular frames or frame sections coupled together via at least two moveable linkages referred to herein as *'belt adjusters'.* This term encompasses moveable components, interfaces or regions that include in particular slew rings, linear actuators (e.g. hydraulic or pneumatic rams, pistons and the like), circular sliding or rolling interfaces, sliding bearing assemblies, part or fully spherical ball-joints, linear sliding mechanisms such as roller mounted beams, pulley arrangements, telescopic rod or beam arrangements and the like.

According to the invention, the apparatus further comprises a third section supporting the belt to extend from the first end roller to the second end roller, the third section positioned and providing a physical connection between the first and second sections.

According to the invention, the first, second and third sections each comprise a rigid frame to mount respectively the first and second end rollers, the belt deflector rollers and the belt adjusters. In particular, the rigid frame of each of the first, second and third sections may be formed by a plurality of beams, stanchions, rods, cables, plates, panels or the like that may be mounted in a rigid or fixed position relative to one another (or placed under tension) so as to define an effectively unitary rigid body having an internal region suitable to accommodate one or a plurality of belt deflector rollers. Preferably, the rigid frame of each section is formed by beams interconnected at their lengthwise ends to define an open structure having an internal region in which is mounted the deflector rollers and in which the conveyor belt is configured to extend. According to the preferred implementation, the belt adjusters are mounted at an interface or a physical junction between the first, second and/or third sections. That is, a belt adjuster component or assembly may be positioned at any region between the frame or the first, second and/or third sections so as to provide a corresponding movement of the sections relative to one another. The belt adjusters may be controlled manually or control may be automated via a remote control such as by electronic, hydraulic or pneumatic actuation.

Preferably, the present invention may be implemented as an L-type belt turning device (or station), in which the first, second (and third) sections are orientated relative to one another to define an 'L'. In particular, the first section (and the belt in the first longitudinal direction) represents the main 'longer' length of the 'L' and the second section (and the belt in the second longitudinal direction) represents the perpendicular extending 'shorter' base part of the 'L'.

Optionally and according to further specific implementations, any one of the belt adjusters may be implemented as a mechanical actuator acting directly upon one or a plurality of the belt deflector rollers. That is, and by way of example, respective axial ends of a belt deflector roller may be coupled to or mounted within an actuator such as a linear actuator (i.e. ram or piston) or a circular moveable interface, such that a rotational axis of the rollers may be adjusted in at least one of a horizontal and/or a vertical plane.

According to the invention, the first belt adjuster comprises a first pivot mechanism to pivot the second section relative to the first section. Optionally, the first pivot mechanism comprises a pivot pin or hinge mechanism such that the second section is configured to pivot relative to the first section. Optionally, the first pivot mechanism comprises two separate pivot actuators including for example a first pivot pin and a second circular interface (such as a slew ring). Optionally, the first pivot pin is mounted at a region at or towards a first end of the second section and at or towards a second end of the third section.

Optionally, the second belt adjuster comprises at least one annular interface acting on at least one of the deflector rollers, the second end roller and/or the third section to rotate said deflector rollers, the second end roller and/or the third section about an axis aligned approximately parallel to a longitudinal axis of the first section. Preferably, the second belt adjustor provides a physical connection between the second end of the third section and a region of the second section such that the second section is capable of slewing in a vertical plane relative to a stationary first and third section. Preferably, the second belt adjuster is implemented as a slew ring (or similar) having a circular interface formed by slide rings, roller bearings, ball bearings or the like.

Optionally, the third belt adjuster comprises at least one annular interface positioned between the first and third sections to pivot the second and third sections about a pivot axis extending through the first section. Preferably, the third belt adjuster provides a physical connection between a first end of the third section and a (mid-length) region of the first section such that the third section and the second section are capable of slewing in a vertical plane relative to a stationary first section. Preferably, the third belt adjuster is implemented as a slew ring (or similar) having a circular interface formed by slide rings, roller bearings, ball bearings or the like.

Optionally, the fourth belt adjuster comprises at least one linear actuator to adjust a length of the third section to cause the second section to move to and from the first end roller in the longitudinal direction of the belt at the first section. Preferably, the fourth belt adjuster comprises a linear actuator such as a hydraulic ram acting on regions of the rigid frame so as to configure parts of the frame to slide or pass over or along other parts of the frame according to a linear elongation and retraction of the frame. Preferably, the fourth belt adjuster is positioned at a second lengthwise end of the third section generally at the region of connection with the second lengthwise end of the second section. Accordingly, the second section is capable of being drawn to and from the terminal end of the first section via linear adjustment of the third section.

Optionally, the fifth belt adjuster comprises at least one annular interface acting on and configured to pivot a rotational axis of the second end roller to determine an angular alignment of the material contact surface of the belt at the second section in a widthwise direction of the belt at the second section. Preferably, the fifth belt adjuster is positioned at the second section at a region towards a second lengthwise end of the second section. Accordingly, a first part of the second section is capable of being rotated about a longitudinal axis extending through the second section relative to a second part of the second section (positioned closest to the third section is a lengthwise direction of the second section). In particular, a majority or all of the length of the second section (the first part) is capable of rotation relative to a short second part of the second section that is attached to a second end of the third section. Accordingly, a majority of the conveyor belt extending within the second section is capable of being rotated or twisted about a longitudinal axis extending through the second section and being generally aligned (i.e. generally parallel) with the second longitudinal direction of the belt.

Preferably, the belt is an endless, continuous belt and the first and second sections each comprise a respective pair of first and second end rollers to support the belt to extend in the first and second longitudinal directions, a material contact surface of the belt aligned to be generally upward facing at the first and second sections between the respective pairs of first and second end rollers. In particular, the belt may comprise a solid woven conveyor belt.

According to a second aspect of the present invention there is provided a conveyor belt assembly for transporting material between locations, the assembly comprising the apparatus as claimed herein.

According to a third aspect of the present invention there is provided a method according to claim 12.

### Brief description of drawings

A specific implementation of the present invention will now be described, by way of example only, and with reference to the accompanying drawings in which:
Figure 1 is an external perspective view of conveyor belt deflection apparatus for deflecting a conveyor belt suitable to transport bulk material according to a first specific implementation of the present invention;
Figure 2 is a plan view of the apparatus of figure 1;
Figure 3 is a further front perspective view of the apparatus of figure 1;
Figure 4 is a plan view of the conveyor belt deflection apparatus of figure 1 with selected frame sections removed for illustrative purposes;
Figure 5 is a right side rear perspective view of the apparatus of figure 4 with frame sections removed for illustrative purposes;
Figure 6 is a perspective view of the belt deflection apparatus of figure 5 with frame sections removed for illustrative purposes;
Figure 7 is a further perspective view of the belt deflection apparatus of figure 5 with frame sections removed for illustrative purposes;
Figure 8 is a further perspective view of the belt deflection apparatus of figure 5 with frame sections removed for illustrative purposes;
Figure 9 is a perspective view of an example belt adjuster positioned at a mechanical interface between frame sections according to a specific implementation of the present invention;
Figure 10 is a magnified view of part of the belt deflection apparatus of figure 1 comprising a linear actuator to provide linear extension and retraction of part of a frame section of the apparatus of figure 1 according to a specific implementation of the present invention.

### Detailed description of preferred embodiment of the invention

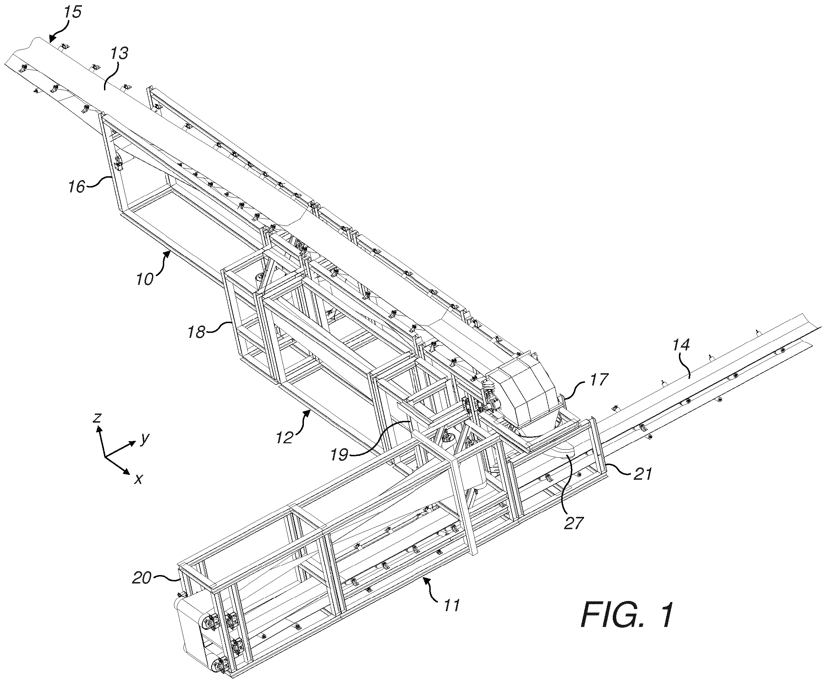

Referring to figures 1 to 3, a conveyor belt deflection apparatus comprises generally a rigid frame structure that supports a plurality of belt deflector rollers around which extend a continuous or endless conveyor belt. The apparatus may be referred to in the alternative as a belt turning station and is suitable for positioning and use within a variety of different environments such as an underground mine for the transport and continuous haulage of extracted bulk material for example within mine tunnels. The apparatus is particularly suitable for positioning at a junction between mine tunnels that extend in different directions with regard to a horizontal and a vertical plane.

According to the specific implementation, the present deflection apparatus comprises a modular construction having a rigid frame formed from a first section 10, a second section 11 and a third section 12. Each section 10, 11, 12 is formed from interconnected elongate beams attached rigidly together via their lengthwise ends to define an open rectangular cuboid structure with each section mounting internally a set of deflector pulleys around which an endless conveyor belt 15 extends in tension. The first section 10 comprises a first and a second lengthwise end 16, 17; second section 12 comprises a first and a second lengthwise end 20, 21 and third section 11 also comprises a respective first and second lengthwise end 18, 19. In a non-geometrically adjusted configuration as illustrated in figures 1 to 3, the length of each section 10, 11, 12 is aligned to extend generally in the same horizontal plane corresponding to an x-y plane. Whilst each section 10, 11, 12 is three-dimensional having a geometry extending in the z direction (the x-z and y-z planes) the sections 10, 11, 12 are aligned to be generally parallel and occupy approximately the same height in the z direction.

Endless conveyor belt 15 is supported at first section 10 so as to extend in a first longitudinal direction 13. Similarly, belt 15 is supported by second section 12 to extend in a second longitudinal direction 14 with direction 14 being aligned generally perpendicular to direction 13 when the apparatus is oriented in the configuration of figures 1 to 3 and in particular when the length of the second section 12 is aligned generally perpendicular to the length of the first section 10. The conveyor belt 15 is configured to extend in the first direction 13 and then to be manipulated or deflected positionally so as to extend in the second longitudinal direction 14. According to the specific implementation, the deflection of the belt from the first to the second longitudinal directions 13, 14 is achieved via a set of belt deflector rollers positioned in the forward direction of belt travel between the first section 10 and the second section 12. In particular, the belt deflector rollers are positioned within the first, second and third sections 10, 11, 12 so as to support the belt 15 along its length and to place and maintain the belt in tension as it travels. The belt deflector rollers are spaced apart in the direction of travel of the belt by an optimum distance being configured to minimise stress and belt wear and to achieve the desired distribution of tension within the belt as it is deflected between the first and second sections.

Referring to figures 1, 3 and 5, belt 15 extends in the first longitudinal direction 13 between a first lengthwise terminal end (not shown) and a second lengthwise terminal end 61. Material supported on belt 15 is capable of being conveyed in the first direction 13 to then fall under gravity from the second terminal end 61 onto the belt 15 extending in the second longitudinal direction 14. The transfer of material from the first to the second longitudinal directions 13, 14 is facilitated by a soft landing chute 27 and a hood 28 positioned at the second terminal end 61. Chute 27 comprises a modular or flexible construction so as to deform or geometrically adapt as the deflection apparatus is manipulated to adjust an orientation of the second longitudinal direction 14 relative to the first longitudinal direction 13.

According to the specific implementation, the present apparatus comprises a set of belt adjusters mounted at or between the first, second and third sections 10, 11, 12 so as to allow geometrical adjustment or repositioning of the sections 10, 11, 12 relative to one another and accordingly provide a geometrical/positional deflection of the belt 15 to extend from the first longitudinal direction 13 to the second longitudinal direction 14. In particular, the apparatus comprises a first belt adjuster 25 (implemented as a pivot pin or rod); a second belt adjuster 26 (implemented as an annular sliding interface); a third belt adjuster 22 (implemented as an annular sliding interface); a fourth belt adjuster 23 (implemented for example as at least one linear hydraulic actuator); and a fifth belt adjuster 24 (implemented as an annular sliding interface). The first belt adjuster 25 is positioned towards the second end 21 of second section 11 and is formed as an elongate pivot pin having an axis extending in the z direction so as to provide a slewing of the second section 11 relative to the first and second sections 10, 12 in a generally horizontal plane (corresponding to the x-y plane). Second belt adjuster 26 (formed as an annular sliding interface) is positioned at the junction, so as to provide an intermediate coupling between, the third section second end 19 and a region of the second section 11 towards second section second end 21. Second belt adjuster 26 is accordingly configured to provide a *'luffing'* of the second section 11 relative to the first section 10 by rotating the second section 11 about an axis aligned with the length of the first section 10 and extending in the x direction. The annular sliding interface of the third belt adjuster 22 is positioned at the junction between the first end 18 of the third section 12 and an approximate mid-length region of the first section 10. In particular, the third section 12 is positioned to extend lengthwise along the second half of the first section 10 with the third section 12 being laterally displaced at the side of the first section 10 such that in the non-adjusted orientation of figure 1 to 3, the third section 12 comprises a length being parallel to a corresponding length of the first section 10. That is, the first and third sections are capable of extending side-by-side and having respective second ends 19, 17 approximately coaligned in the x direction. The third belt adjuster 22 is configured to provide a pivoting or rotation of the third section 12 (and hence the second section 11) about the first section 10 so as to effectively raise and lower in a vertical plane (corresponding to the z-x plane) the belt extending in the second longitudinal direction 14 relative to a first longitudinal direction 13. The fourth belt adjuster 23 (being formed from at least one linear actuator, such as a hydraulic ram) is positioned at the second end 19 of third section 12 so as to provide a linear adjustable coupling between the third section second end 19 and the second section 11. Accordingly, by actuation of the fourth belt adjuster 23, the second section 11 is capable of being displaced linearly in the x direction relative to the first section 10. Accordingly, the belt extending in the second longitudinal direction 14 is capable of being moved laterally along its length, corresponding to movement in the x direction (i.e., the orientation of the first longitudinal direction 13). The fifth belt adjuster 24 is implemented as a further annular sliding interface and is positioned in close proximity to the fourth belt adjuster 23 and a lengthwise region of the second section 11 close to the connection with the third section 12.

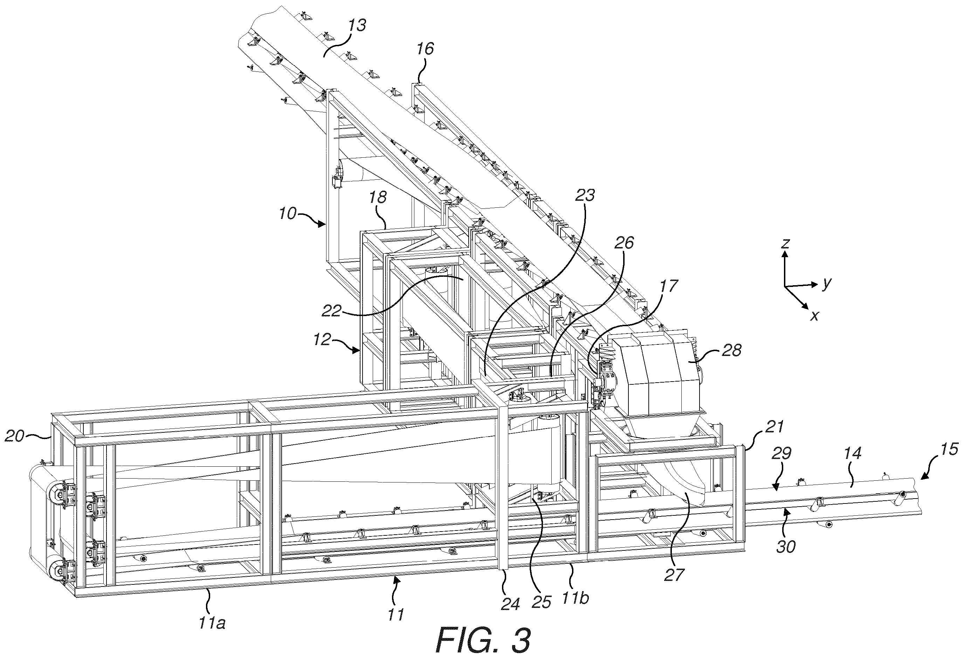

In order to ensure material is effectively and efficiently transferred from the belt 15 extending along the first section 10 to the belt 15 extending along the second section 11, an upward facing material contact face 29 of the belt extending in the second longitudinal direction 14 must be aligned to be generally co-planar with the corresponding material contact surface of the belt 15 extending in the first longitudinal direction, as illustrated in figure 3 so as to be orientated appropriately with the material flow. That is, the belt 15 comprises the material contact face 29 that is intended to be generally upward facing and a corresponding/opposed rear face 30 that is intended to be downward facing in the z direction. Additionally, the position of the material contact face 29 and the belt in the second longitudinal direction 14 is required to be positioned directly below the second terminal end 61 of the belt at the first section 10. Such conditions must be satisfied in order to avoid 'material roll' at the material contact face 29 and mis-feeding/transfer of material from the first longitudinal direction 13 to the second longitudinal direction 14. These conditions are achieved whilst providing three-dimensional positional adjustment of the orientation of the belt extending in the second longitudinal direction 14 in the x-y, z-x and z-y planes via the first, second, third, fourth and fifth belt adjusters 25, 26, 22, 23, 24.

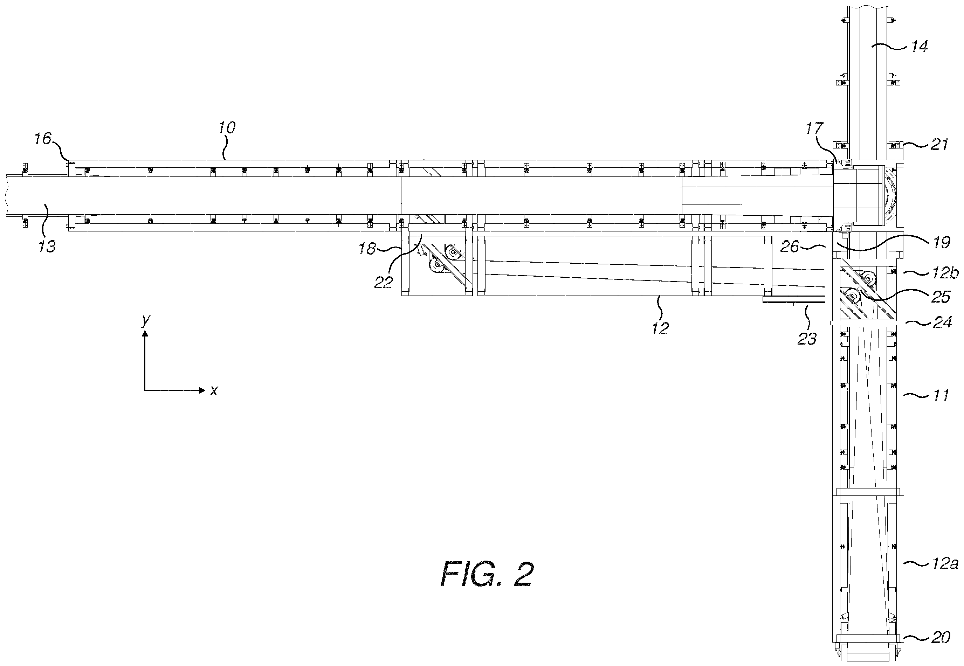

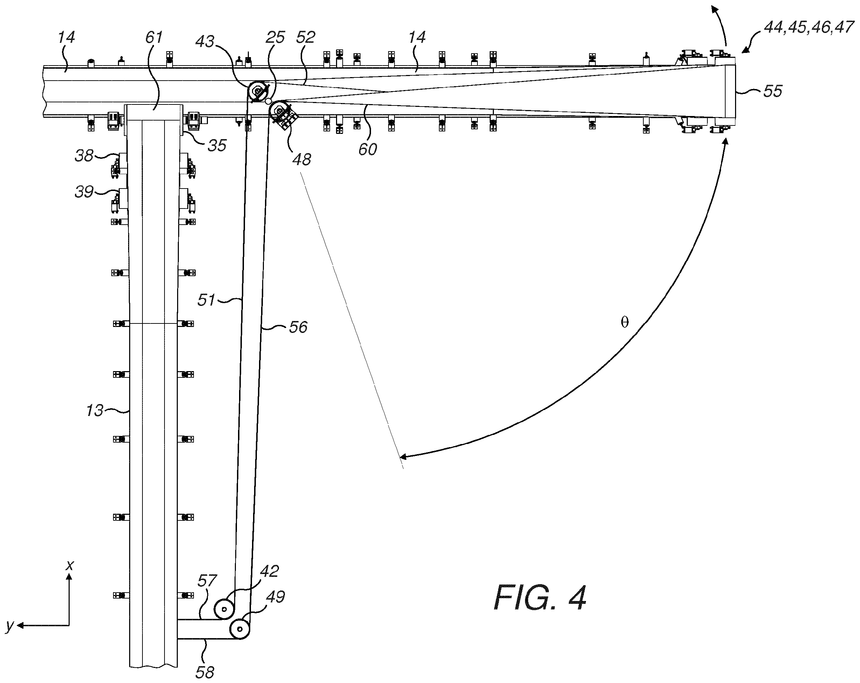

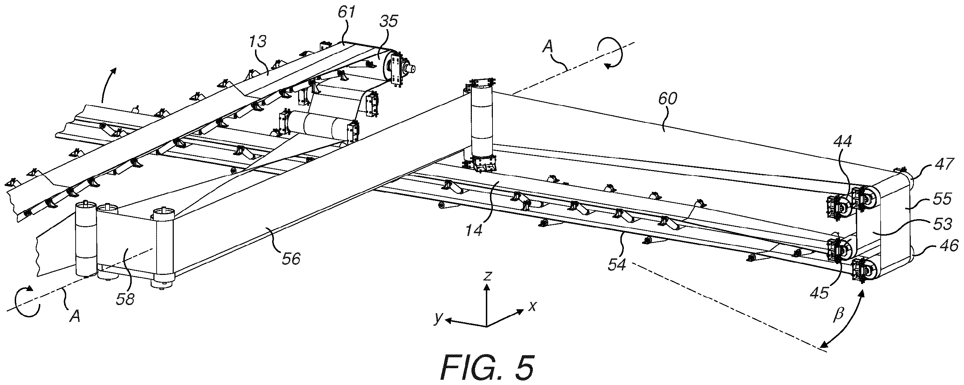

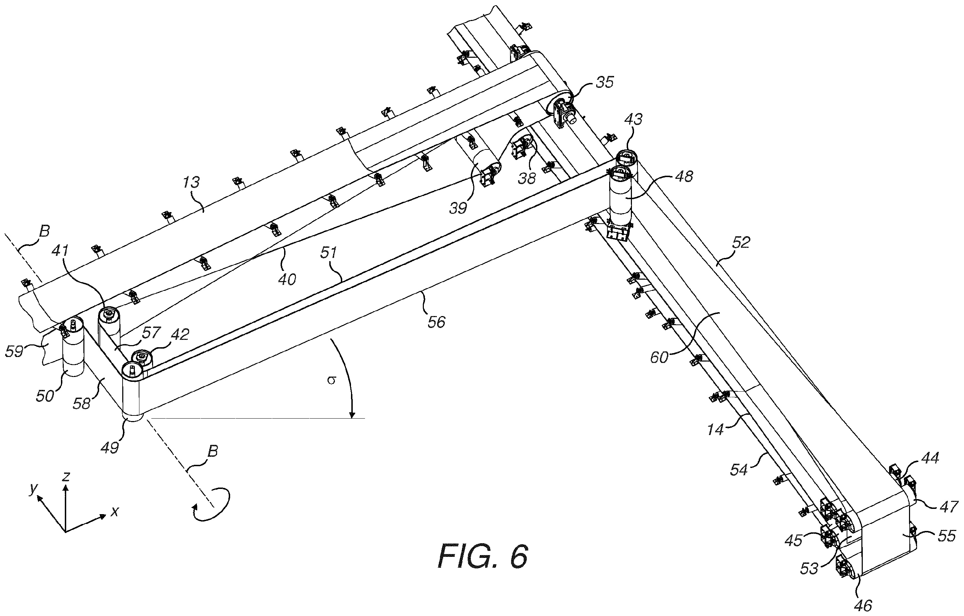

Figures 4 to 8 illustrate the apparatus with the modular first, second and third frame sections 10, 11, 12 removed for illustrative purposes. Referring to figure 4, the first belt adjuster 25 is configured to provide slewing of the second section 11 (and hence the belt extending in the second longitudinal direction 14) over a slew angle θ in the x-y plane (corresponding generally to the horizontal plane). According to the specific implementation, θ may be in the range 0 to 160 degrees. By mounting the pivot axis of the first belt adjuster 25 in close proximity to the second terminal end 61, lateral deflection of the belt extending in the second longitudinal direction 14 (immediately below terminal end 61) is minimised whilst achieving the desired change of position (via slewing) of the second section 11 in the x-y plane. In particular, the pivot pin or axle of the first belt adjuster 25 comprises an axis being aligned in the z direction when the apparatus is orientated in a non-adjusted configuration as shown in figures 1 to 3. Referring to figures 2 and 5, the second belt adjuster 26 is configured to provide rotation of the second section 11 (and hence the belt extending in the second longitudinal direction 14) about an axis A aligned in the x direction (with the apparatus in the non-adjusted configuration of figures 1 to 3). Accordingly, section 11 is configured to pivot in the z-y plane (corresponding to a vertical plane) so as to tilt or incline the angular orientation (β) of the belt extending in the second longitudinal direction 14 relative to the belt extending in the first longitudinal direction 13. Such manipulation may be referred to as a *'luffing'* geometrical adjustment of the second section 11 relative to the first section 10 (and third section 12). The angular adjustment (angle β) of the section 11 relative to the first section 10 about axis A may be in the range 20 to 30 degrees. Referring to figures 2 and 6, third belt adjuster 22 is configured to provide a corresponding pivoting or rotation of the second section 11 (and third section 12) relative to the first section 10 about a pivot axis B aligned in the y direction. In particular, axis B is aligned generally perpendicular to the first longitudinal direction 13 and bisects the first section 11 at an approximate mid-length position corresponding to the region of attachment with the third section 12. Accordingly, the second section 11 is capable of being raised and lowered in the z-x plane (corresponding to a generally vertical plane) so as to raise and lower the belt extending in the second longitudinal direction 14 relative to the first longitudinal direction 13. An angular adjustment σ of the belt extending in the second longitudinal direction 14 about axis B in the vertical z-x plane may be in the range 15 to 30 degrees.

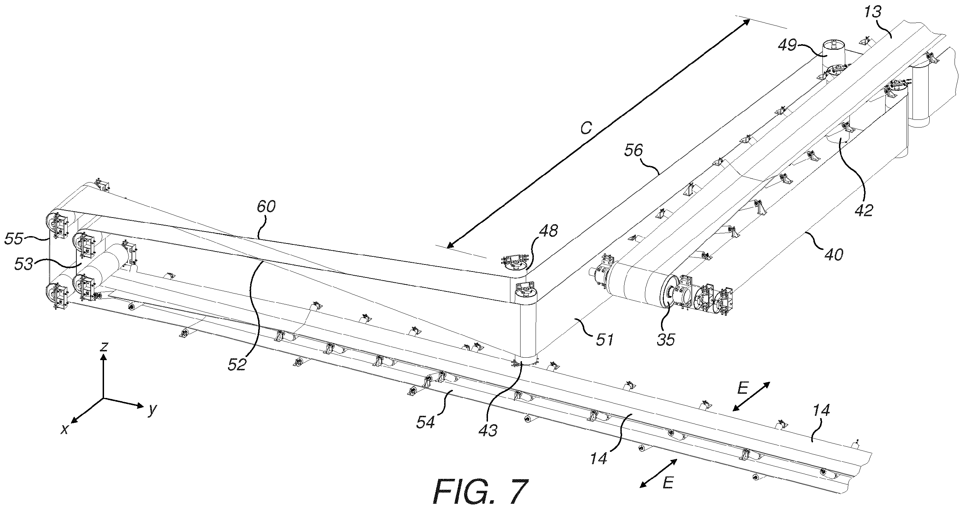

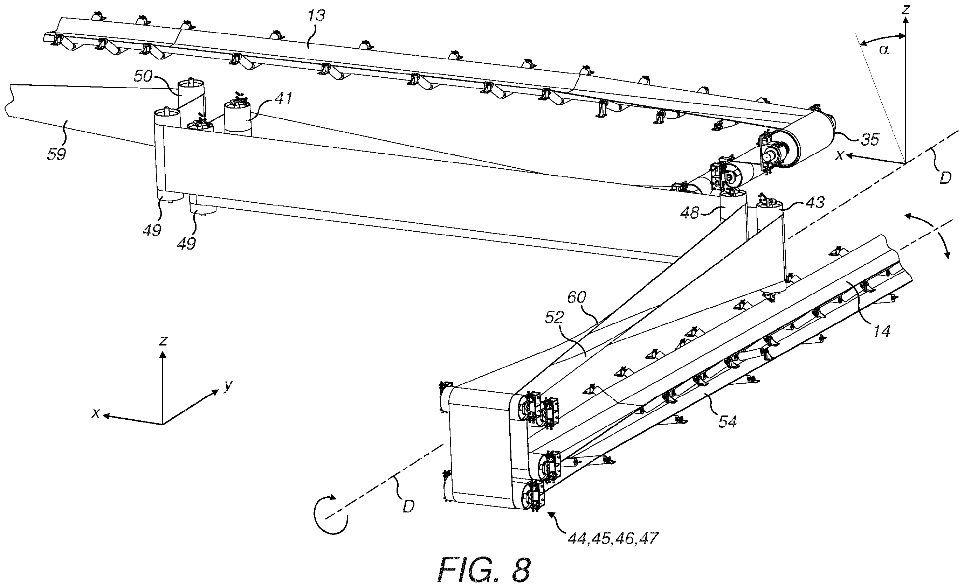

Referring to figures 2 and 7, the fourth belt adjuster 23 is configured to provide a linear lengthwise adjustment of the third section 12 in the direction C being aligned generally parallel to the x direction (when the apparatus is orientated in the configuration of figure 7 i.e., without any displacement of the sections 10, 11 and 12 by the remaining belt adjusters 22, 24, 25, 26). Accordingly, the belt extending in the second longitudinal direction 14 may be adjusted laterally (corresponding to direction E being perpendicular to the second lengthwise direction 14) so as to displace the belt at the second section 11 towards and away from the second terminal end 61. Referring to figures 2 and 8, fifth belt adjuster 24, implemented as an annular sliding interface, is configured to provide a rotation or angular adjustment of the upward facing material contact face 29 of the belt 15 extending in the second longitudinal direction 14. Such angular adjustment is actuated about longitudinal axis D being aligned parallel to the second longitudinal direction 14 extending in the y direction. Angular adjustment α (by the rotation of the belt 15 in the second longitudinal direction 14) about axis D may be in the range 20 to 30 degrees. The fifth belt adjuster 24 is adapted to ensure the belt upward facing material contact face 29 (in a widthwise direction across belt 15) is always aligned as close as possible to horizontal (the x-y plane).

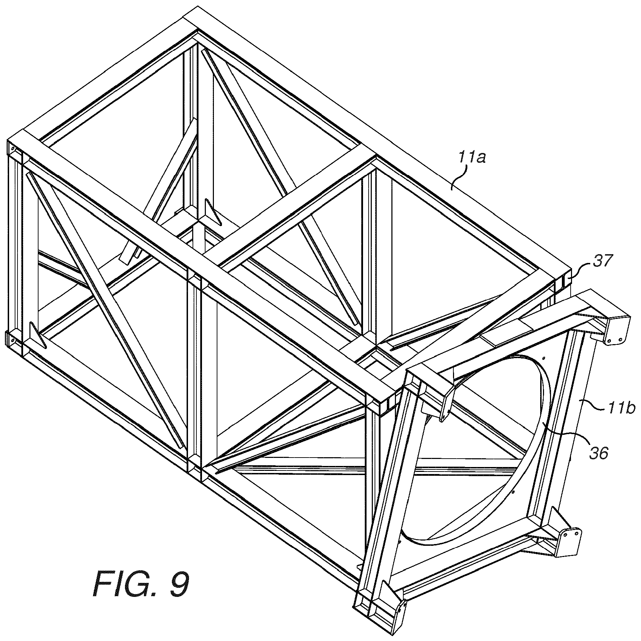

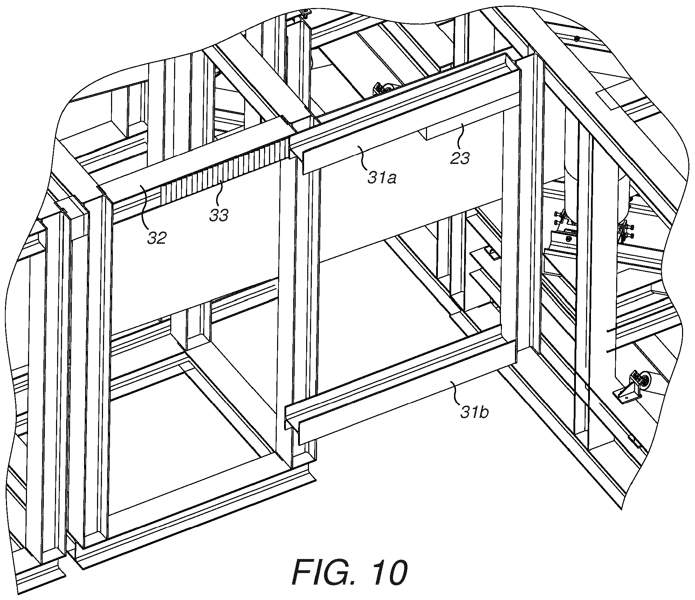

Example specific implementations of the various belt adjuster mechanisms are described referring to figures 9 and 10. In particular, figure 9 illustrates an example annular sliding interface configured to provide rotation (or slewing) of parts (or regions of connection) of the first, second and third sections 10, 11 and 12. In particular, and referring to figure 9 by way of an example, a rotational interface 37 is provided by an annular slew ring 36 that forms a physical coupling or connection between a first part 11a and a second part 11b of the second section 11. Accordingly, the first part 11a of second section 11 is capable of rotating about axis D relative to second part 11b of second section 11. The sliding interface 37 may be formed by roller bearings, ball bearings or low friction sliding plates. This type of sliding interface 37 as illustrated in figure 9 may be used for the second 26, third 22 or fifth 24 belt adjusters. Optionally, accordingly to further specific implementations, the pivot pin actuator of the first belt adjuster 25 may be implemented as a sliding interface 37 as illustrated in figure 9. Optionally, the first belt adjuster 25 may be implemented as a sliding interface 37 in addition to a pivot pin (or axle) with the sliding interface 37 positioned at a different region along the length of second section 11 relative to the pivot pin positioned as illustrated in figure 4.

The linear adjustment provided by the fourth belt adjuster 23 may be implemented according to the arrangement illustrated in figure 10 in which a linear actuator provides linear adjustment of a first and second frame part 31a, 31b relative to a second frame part 32 forming respective component parts of the third section 12. In particular, a roller track 33 may be provided at frame part 32 to allow frame part 31a, 31b to slide linearly in the x direction aligned with the first longitudinal direction 13.

Referring to figures 4 to 8, the apparatus comprises a plurality of belt deflector rollers positioned in the belt travel direction between the belt extending in the first and second longitudinal directions 13, 14. In particular, an end roller 35 defines the second terminal end 61 of the belt travelling in the first longitudinal direction 13. The belt is then deflected by a first and second roller 38, 39 (having axes parallel to the axis of roller 35) so as to be displaced downwardly in the z-x plane. The belt then passes around a third roller 41 having an axis aligned perpendicular to the axes of the first and second rollers 35, 39 such that the belt is twisted/rotated (about 90 degrees) within a travel section 40 between the second and third rollers 39, 41. A fourth roller 42 has an axis aligned parallel to the axis of third roller 41 and is spaced laterally to one side of the third rollers 41 in the y direction such that the belt extends along travel section 57 laterally sideways (in the y direction) from the first section 10 into the third section 12. The belt then extends along travel section 51 around a fifth deflector roller 43 positioned at second section 11. A sixth deflector roller 44 is mounted at the first end 20 of second section 11 to provide belt travel section 52 between rollers 43, 44. Roller 44 comprises an axis aligned perpendicular to the axis of roller 43 such that the belt is twisted/rotated (about 90 degrees) as it extends along travel section 52 between rollers 43 and 44. The belt is then fed around an end roller 45 that defines a lead end of the belt 15 extending in the second longitudinal direction 14 and along the second section 11. The end roller 45 comprises an axis aligned parallel to the axis of roller 44 and is spaced apart a short distance in the z direction so as to define a short belt travel section 53. The belt is then fed around an opposite end roller (not shown) so as to return in direction to extend along travel section 54 immediately below the belt fed around end roller 45. The belt then travels around a seventh deflector roller 46, along a short linear travel section 55 and then around an eighth deflector roller 47 also mounted at the first end 20 of second section 11. Accordingly, the first end 20 of second section 11 provides a mount for a set of four rollers 44, 45, 46, 47 all having respective axes aligned parallel (corresponding to the x direction) and generally perpendicular to fifth roller 43. The belt then travels between roller 47 and a ninth belt adjuster roller 48 positioned in close proximity to roller 43 and towards the second end 21 of second section 11. The belt travel section 60 between rollers 47 and 48 is also twisted/rotated (about 90 degrees) according to the same travel section 52 between rollers 43 and 44. The belt then extends around a tenth deflector roller 49 positioned at the first end 18 of third section 12 so as to provide a section of belt travel 56 between rollers 48 and 49 being generally parallel and adjacent to belt travel section 51 (between rollers 42 and 43). The belt is then returned laterally to travel along travel section 58 into first section 10 at the first end 18 of third section 12. The belt then extends around an eleventh deflector roller 50 where it is deflected from the lateral sideways direction at travel section 58 to extend in a travel section 59 aligned parallel to the first longitudinal direction 13 and the belt travel section 40. Rollers 41, 42, 43, 48, 49 and 50 all comprise respective axes aligned generally parallel when the apparatus is orientated in the configuration of figures 1 to 8. It will be appreciated that the orientation of these axes relative to one another changes as the sections 10, 11 and 12 (and hence any one or combinations of the rollers 38, 39 and 41 to 50) are geometrically translated by the belt adjusters 22, 23, 24, 25 and 26.

The respective belt travel sections 40, 59 extend directly and immediately below the belt extending in the first longitudinal direction 13 and within the internal region defined by the frame of the rectangular cuboid first section 10. Similarly, the belt travel sections 51, 56 extend within the internal structure of the third section 12 and the belt travel sections 52, 60, 54 and 14 extend within the internal region defined by the frame of the second section 11. The first terminal end (not shown) defines one end of the belt extending in the first longitudinal direction 13 and also comprises a corresponding end roller (not shown) and a corresponding pair of deflector rollers (not shown) being similar to rollers 35, 38 and 39 respectively.

The first belt adjuster 25 is positioned between rollers 43, 48 so as to displace the set of rollers 44, 45, 46, 47 in the x-y plane with a pivot axis of the first belt adjuster 25 being aligned parallel to rollers 43, 48. The position of the mounting of the second belt adjuster 26 provides a corresponding rotation of the belt deflector rollers mounted at the second section 11 (encompassing rollers 43 to 48). The third belt adjuster 22 positioned at the junction between the third section first end 18 and the mid-length region of the first section 11 is accordingly configured to provide rotation about axis B of the rollers at the second and third sections, corresponding to rollers 42 to 49. The linear adjustment provided by the fourth belt adjuster 23 is accordingly configured to provide a linear adjustment in the x direction of the rollers 43 to 48 at the second section 11 relative to the rollers 42, 49 mounted at the first end 18 of the third section 12. This linear adjustment in the direction C accordingly provides a shortening of the length of belt travel sections 51 and 56. Additionally, the fifth belt adjuster 24 (providing rotation about axis D aligned in the y direction) provides a corresponding rotation of the set of rollers 44, 45, 46, 47 at the first end 20 (and within the first par 11a) of the second section 11 relative to rollers 43, 48 mounted within the second part 11b of the second section 11. Accordingly, the degree of twist of the belt at travel sections 52, 60 may be adjusted to provide a corresponding adjustment of the orientation of the upward facing material contact face 29 of the belt extending in the second longitudinal direction 14. According to the specific implementation, the first, second and third belt adjusters 25, 26, 22 may be regarded as providing a primary adjustment of the belt extending in the second longitudinal direction 14 whilst the fourth and fifth belt adjusters 23, 24 may be regarded as providing a secondary translational movement. In particular, the fourth and fifth belt adjusters 23, 24 are required to ensure the correct alignment of the material contact face 29 and the positioning of the material contact face 29 immediately below the terminal end 61 of the belt extending in the first section 10. Such a configuration is advantageous to provide geometric three-dimensional adjustment of the belt extending in the second longitudinal direction 14 so as to adapt the apparatus to a desired configuration, for example a mine tunnel junction.

## Claims

1. Conveyor belt deflection apparatus for deflecting a conveyor belt (15), the apparatus comprising:
a conveyor belt (15) suitable to transport material;
a first section (10) supporting the belt (15) to extend in a first longitudinal direction (13) terminated by at least one first end roller (35);
a second section (11) supporting the belt (15) to extend in a second longitudinal direction (14) terminated by at least one second end roller (45), the second longitudinal direction (14) aligned transverse or generally perpendicular to the first direction (13);
a plurality of belt deflector rollers (38, 39, 41 to 44, 46 to 50) positioned in a direction of belt travel between the first and second end rollers (35, 45) to deflect the belt (15) to extend from the first longitudinal direction (13) to the second longitudinal direction (14);
a first belt adjuster (25) comprising a first pivot mechanism to pivot the second section (11) relative to the first section (10), the first belt adjuster (25) is configured to slew about a slew axis the belt (15) extending at the second section (11) relative to the belt (15) extending at the first section (10) to adjust an angular orientation in a horizontal plane between the belt (15) extending in the first and second longitudinal directions (13, 14) at the respective first and second sections (10, 11);
**characterised by**:
a second belt adjuster (26) comprising a mechanical actuator acting directly upon one or a plurality of the belt deflector rollers,
the second belt adjuster (26) is configured to provide rotation of the second section (11) about an axis (A) aligned in the x direction with the first longitudinal direction (13), wherein the second section (11) is configured to pivot in a vertical plane (z-y) in order to tilt or incline the angular orientation (β) of the belt extending in the second longitudinal direction (14) relative to the belt extending in the first longitudinal direction (13),
the second belt adjuster (26) is configured to provide a first rotation of the belt (15) at a position between the first and second end rollers (35, 45) to adjust the angular orientation in the vertical plane of the belt (15) extending in the second longitudinal direction (14) at the second section (11) relative to the belt (15) extending in the first longitudinal direction (13) at the first section (10);
wherein
wherein the apparatus further comprising a third section (12) supporting the belt (15) to extend from the first end roller (35) to the second end roller (45), the third section (12) positioned between and providing a physical connection between the first and second sections (10, 11), and
wherein the first, second and third sections (10, 11, 12) each comprise a rigid frame to mount respectively the first and second end rollers (35, 45), the belt deflector rollers (38, 39, 41 to 44, 46 to 50) and the belt adjusters (25, 26, 22, 23, 24).

2. The apparatus as claimed in claim 1 further comprising a third belt adjuster (22) being different to the second belt adjuster (26) to raise and lower in a vertical plane the belt (15) at the second section (11) relative to the belt (15) at the first section (10).

3. The apparatus as claimed in claims 1 or 2 further comprising a fourth belt adjuster (23) to adjust laterally a position of the belt (15) extending at the second section (11) in a horizontal plane relative to the first end roller (35) and in a direction aligned with the first longitudinal direction (13) so as to align the belt (15) at the second section (11) relative to the first end roller (35).

4. The apparatus as claimed in any preceding claim further comprising a fifth belt adjuster (24) to adjust an angle at which a generally upward facing material contact surface (29) of the belt (15) at the second section (11) extends in a widthwise direction of the belt at the second section (11) relative to a horizontal plane.

5. The apparatus as claimed in claim 4 wherein the first, second, third, fourth and fifth belt adjusters (25, 26, 22, 23, 24) are all separate and additional relative to one another.

6. The apparatus as claimed in any preceding claim wherein the second belt adjuster (26) comprises at least one annular interface acting on at the deflector rollers (43, 44, 46 to 48), the second end roller (45) and/or the second section (11) to rotate said deflector rollers (43, 44, 46 to 48), the second end roller (45) and/or the second section (11) about an axis (A) aligned approximately parallel to a longitudinal axis of the first section (10).

7. The apparatus as claimed in claim 2 wherein the third belt adjuster (22) comprises at least one annular interface positioned between the first and third sections (10, 12) to pivot the second and third sections (11, 12) about a pivot axis (B) extending through the first section (10).

8. The apparatus as claimed in any preceding claim wherein the fourth belt adjuster (23) comprises at least one linear actuator to adjust a length of the third section (12) to cause the second section (11) to move to and from the first end roller (35) in the longitudinal direction of the belt (15) at the first section (10).

9. The apparatus as claimed in any preceding claim when dependent on claim 3 wherein the fifth belt adjuster (24) comprises at least one annular interface acting on and configured to pivot a rotational axis of the second end roller (45) to determine an angular alignment of the material contact surface (29) of the belt (15) at the second section (11) in a widthwise direction of the belt (15) at the second section (11).

10. The apparatus as claimed in any preceding claim wherein the belt (15) is an endless, continuous belt and the first and second sections (10, 11) each comprise a respective pair of first and second end rollers (35, 45) to support the belt (15) to extend in the first and second longitudinal directions (13, 14), a material contact surface (29) of the belt (15) aligned to be generally upward facing at the first and second sections (10, 11) between the respective pairs of first and second end rollers (35, 45).

11. A conveyor belt assembly for transporting material between locations, the assembly comprising at least one of the apparatus as claimed in any preceding claim.

12. A method of conveying material with the apparatus as in any of claims 1-10 for transportation from a first location to a second location, the method comprising:
driving travel of a conveyor belt (15) to extend in a first longitudinal direction (13) at a first section (10) terminated by at least one first end roller (35);
driving travel of the conveyor belt (15) to extend in a second longitudinal direction (14) at a second section (11) terminated by at least one second end roller (45), the second longitudinal direction (14) aligned transverse or generally perpendicular to the first direction (10);
deflecting the belt (15) to extend from the first longitudinal direction (10) to the second longitudinal direction (14) by a plurality of belt deflector rollers (38, 39, 41 to 44, 46 to 50) positioned in the direction of belt travel between the first and second end rollers (35, 45);
slewing the belt (15) extending in the second longitudinal direction (14) at the second section (11) relative to the belt (15) extending in the first longitudinal direction (13) at the first section (10) about a slew axis to adjust an angular orientation in a horizontal plane between the belt (15) extending in the first and second longitudinal directions (13, 14) at the respective first and second sections (10, 11);
rotating the belt (15) at a position between the first and second end rollers (35, 45) via a second belt adjuster (26) to adjust an angular orientation in a vertical plane of the belt (15) extending in the second longitudinal direction (14) at the second section (11) relative to the belt (15) extending in the first longitudinal direction (13) at the first section (10).

## Patentansprüche

1. Förderbandumlenkeinrichtung zum Umlenken eines Förderbandes (15), wobei die Einrichtung umfasst:
ein Förderband (15), das zum Transport von Material geeignet ist;
einen ersten Abschnitt (10), der das Band (15) so trägt, dass es sich in einer ersten Längsrichtung (13) erstreckt, die durch mindestens eine erste Endrolle (35) abgeschlossen wird;
einen zweiten Abschnitt (11), der das Band (15) so trägt, dass es sich in einer zweiten Längsrichtung (14) erstreckt, die durch mindestens eine zweite Endrolle (45) abgeschlossen wird, wobei die zweite Längsrichtung (14) quer oder im Allgemeinen senkrecht zu der ersten Richtung (13) ausgerichtet ist;
eine Vielzahl von Bandumlenkrollen (38, 39, 41 bis 44, 46 bis 50), die in einer Bandlaufrichtung zwischen den ersten und zweiten Endrollen (35, 45) positioniert sind, um das Band (15) umzulenken, damit es sich von der ersten Längsrichtung (13) zu der zweiten Längsrichtung (14) erstreckt;
eine ersten Bandeinstellvorrichtung (25), die einen ersten Schwenkmechanismus umfasst, um den zweiten Abschnitt (11) relativ zu dem ersten Abschnitt (10) zu schwenken, wobei die erste Bandeinstellvorrichtung (25) so konfiguriert ist, dass sie das sich am zweiten Abschnitt (11) erstreckende Band (15) relativ zu dem sich am ersten Abschnitt (10) erstreckenden Band (15) um eine Schwenkachse schwenkt, um eine Winkelausrichtung in einer horizontalen Ebene zwischen dem sich in der ersten und zweiten Längsrichtung (13, 14) erstreckenden Band (15) am jeweiligen ersten und zweiten Abschnitt (10, 11) einzustellen;
**gekennzeichnet durch**:
eine zweite Bandeinstellvorrichtung (26), umfassend ein mechanisches Stellglied, das direkt auf eine oder mehrere der Bandumlenkrollen einwirkt,
wobei die zweite Bandeinstellvorrichtung (26) so konfiguriert ist, dass sie eine Drehung des zweiten Abschnitts (11) um eine Achse (A) bereitstellt, die in der x-Richtung mit der ersten Längsrichtung (13) ausgerichtet ist, wobei der zweite Abschnitt (11) so konfiguriert ist, dass er in einer vertikalen Ebene (z-y) schwenkt, um die Winkelausrichtung (β) des sich in der zweiten Längsrichtung (14) erstreckenden Bandes relativ zu dem sich in der ersten Längsrichtung (13) erstreckenden Band zu kippen oder zu neigen,
wobei die zweite Bandeinstellvorrichtung (26) so konfiguriert ist, dass sie eine erste Drehung des Bandes (15) an einer Position zwischen der ersten und der zweiten Endrolle (35, 45) bereitstellt, um die Winkelausrichtung in der vertikalen Ebene des Bandes (15), das sich in der zweiten Längsrichtung (14) an dem zweiten Abschnitt (11) erstreckt, relativ zu dem Band (15) einzustellen, das sich in der ersten Längsrichtung (13) an dem ersten Abschnitt (10) erstreckt;
wobei
wobei die Einrichtung weiter einen dritten Abschnitt (12) umfasst, der das Band (15) so trägt, dass es sich von der ersten Endrolle (35) zu der zweiten Endrolle (45) erstreckt, wobei der dritte Abschnitt (12) zwischen dem ersten und dem zweiten Abschnitt (10, 11) positioniert ist und eine physische Verbindung zwischen diesen bereitstellt, und
wobei der erste, der zweite und der dritte Abschnitt (10, 11, 12) jeweils einen starren Rahmen zur Befestigung der ersten und der zweiten Endrolle (35, 45), der Bandumlenkrollen (38, 39, 41 bis 44, 46 bis 50) und der Bandeinstellvorrichtungen (25, 26, 22, 23, 24) umfassen.

2. Einrichtung nach Anspruch 1, weiter umfassend eine dritte Bandeinstellvorrichtung (22), die sich von der zweiten Bandeinstellvorrichtung (26) unterscheidet, um das Band (15) am zweiten Abschnitt (11) relativ zu dem Band (15) am ersten Abschnitt (10) in einer vertikalen Ebene anzuheben und abzusenken.

3. Einrichtung nach Anspruch 1 oder 2, weiter umfassend eine vierte Bandeinstellvorrichtung (23) zum seitlichen Einstellen einer Position des Bandes (15), das sich an dem zweiten Abschnitt (11) in einer horizontalen Ebene relativ zu der ersten Endrolle (35) und in einer mit der ersten Längsrichtung (13) ausgerichteten Richtung erstreckt, um das Band (15) an dem zweiten Abschnitt (11) relativ zu der ersten Endrolle (35) auszurichten.

4. Einrichtung nach einem der vorstehenden Ansprüche, weiter umfassend eine fünfte Bandeinstellvorrichtung (24) zum Einstellen eines Winkels, in dem sich eine im Allgemeinen nach oben weisende Materialkontaktfläche (29) des Bandes (15) am zweiten Abschnitt (11) in einer Breitenrichtung des Bandes am zweiten Abschnitt (11) relativ zu einer horizontalen Ebene erstreckt.

5. Einrichtung nach Anspruch 4, wobei der erste, zweite, dritte, vierte und fünfte Bandeinstellvorrichtungen (25, 26, 22, 23, 24) alle separat und zusätzlich relativ zueinander sind.

6. Einrichtung nach einem der vorstehenden Ansprüche, wobei die zweite Bandeinstellvorrichtung (26) mindestens eine ringförmige Schnittstelle umfasst, die auf die Umlenkrollen (43, 44, 46 bis 48), die zweite Endrolle (45) und/oder den zweiten Abschnitt (11) einwirkt, um die Umlenkrollen (43, 44, 46 bis 48), die zweite Endrolle (45) und/oder den zweiten Abschnitt (11) um eine Achse (A) zu drehen, die ungefähr parallel zu einer Längsachse des ersten Abschnitts (10) ausgerichtet ist.

7. Einrichtung nach Anspruch 2, wobei die dritte Bandeinstellvorrichtung (22) mindestens eine ringförmige Schnittstelle umfasst, die zwischen dem ersten und dem dritten Abschnitt (10, 12) positioniert ist, um den zweiten und den dritten Abschnitt (11, 12) um eine Schwenkachse (B) zu schwenken, die durch den ersten Abschnitt (10) verläuft.

8. Einrichtung nach einem der vorstehenden Ansprüche, wobei die vierte Bandeinstellvorrichtung (23) mindestens ein lineares Stellglied umfasst, um eine Länge des dritten Abschnitts (12) einzustellen, um zu bewirken, dass sich der zweite Abschnitt (11) in Längsrichtung des Bandes (15) am ersten Abschnitt (10) zur ersten Endrolle (35) hin und von dieser weg bewegt.

9. Einrichtung nach einem der vorstehenden Ansprüche, wenn sie von Anspruch 3 abhängt, wobei die fünfte Bandeinstellvorrichtung (24) mindestens eine ringförmige Schnittstelle umfasst, die auf eine Drehachse der zweiten Endrolle (45) einwirkt und so konfiguriert ist, dass sie diese schwenkt, um eine Winkelausrichtung der Materialkontaktfläche (29) des Bandes (15) am zweiten Abschnitt (11) in einer Breitenrichtung des Bandes (15) am zweiten Abschnitt (11) zu bestimmen.

10. Einrichtung nach einem der vorstehenden Ansprüche, wobei das Band (15) ein Endlosband ist und der erste und der zweite Abschnitt (10, 11) jeweils ein entsprechendes Paar erster und zweiter Endrollen (35, 45) umfassen, um das Band (15) so zu stützen, dass es sich in der ersten und der zweiten Längsrichtung (13, 14) erstreckt, wobei eine Materialkontaktfläche (29) des Bandes (15) so ausgerichtet ist, dass sie an dem ersten und dem zweiten Abschnitt (10, 11) zwischen den entsprechenden Paaren erster und zweiter Endrollen (35, 45) allgemein nach oben weist.

11. Förderbandanordnung zum Transportieren von Material zwischen Orten, wobei die Anordnung mindestens eine der in einem der vorstehenden Ansprüche genannten Einrichtungen umfasst.

12. Verfahren zum Fördern von Material mit der Einrichtung nach einem der Ansprüche 1-10 zum Transport von einem ersten Ort zu einem zweiten Ort, wobei das Verfahren umfasst:
Antreiben eines Förderbandes (15) in einer ersten Längsrichtung (13) in einem ersten Abschnitt (10), der von mindestens einer ersten Endrolle (35) abgeschlossen wird;
Antreiben des Förderbandes (15) in einer zweiten Längsrichtung (14) in einem zweiten Abschnitt (11), der von mindestens einer zweiten Endrolle (45) abgeschlossen wird, wobei die zweite Längsrichtung (14) quer oder allgemein senkrecht zur ersten Richtung (10) ausgerichtet ist;
Umlenken des Bandes (15), so dass es sich von der ersten Längsrichtung (10) in die zweite Längsrichtung (14) erstreckt, durch eine Vielzahl von Bandumlenkrollen (38, 39, 41 bis 44, 46 bis 50), die in der Bandlaufrichtung zwischen der ersten und der zweiten Endrolle (35, 45) positioniert sind;
Herumschwenken des in der zweiten Längsrichtung (14) am zweiten Abschnitt (11) verlaufenden Bandes (15) relativ zu dem in der ersten Längsrichtung (13) am ersten Abschnitt (10) verlaufenden Band (15) um eine Schwenkachse, um eine Winkelausrichtung in einer horizontalen Ebene zwischen dem in der ersten und der zweiten Längsrichtung (13, 14) am jeweiligen ersten und zweiten Abschnitt (10, 11) verlaufenden Band (15) einzustellen;
Drehen des Bandes (15) an einer Position zwischen der ersten und der zweiten Endrolle (35, 45) über einen zweite Bandeinstellvorrichtung (26), um eine Winkelausrichtung in einer vertikalen Ebene des Bandes (15), das sich in der zweiten Längsrichtung (14) an dem zweiten Abschnitt (11) erstreckt, relativ zu dem Band (15), das sich in der ersten Längsrichtung (13) an dem ersten Abschnitt (10) erstreckt, einzustellen.

## Revendications

1. Appareil de déviation de courroie transporteuse permettant de dévier une courroie (15) transporteuse, l'appareil comprenant :
une courroie (15) transporteuse appropriée pour déplacer un matériau ;
une première section (10) supportant la courroie (15) pour qu'elle s'étende dans une première direction longitudinale (13) terminée par au moins un premier rouleau d'extrémité (35) ;
une deuxième section (11) supportant la courroie (15) pour qu'elle s'étende dans une seconde direction longitudinale (14) terminée par au moins un second rouleau d'extrémité (45), la seconde direction longitudinale (14) étant alignée transversale ou généralement perpendiculaire à la première direction (13) ;
une pluralité de rouleaux de déviation (38, 39, 41 à 44, 46 à 50) de courroie positionnés dans une direction de parcours de courroie entre les premier et second rouleaux d'extrémité (35, 45) pour dévier la courroie (15) pour qu'elle s'étende à partir de la première direction longitudinale (13) jusqu'à la seconde direction longitudinale (14) ;
un premier ajusteur de courroie (25) comprenant un premier mécanisme de pivot pour faire pivoter la deuxième section (11) par rapport à la première section (10), le premier ajusteur de courroie (25) est configuré pour décaler autour d'un axe de décalage la courroie (15) s'étendant au niveau de la deuxième section (11) par rapport à la courroie (15) s'étendant au niveau de la première section (10) pour ajuster une orientation angulaire dans un plan horizontal entre la courroie (15) s'étendant dans les première et seconde directions longitudinales (13, 14) au niveau des première et deuxième sections (10, 11) respectives ;
**caractérisé par** :
un deuxième ajusteur de courroie (26) comprenant un actionneur mécanique agissant directement sur un ou une pluralité des rouleaux de déviation de courroie,
le deuxième ajusteur de courroie (26) est configuré pour fournir une rotation de la deuxième section (11) autour d'un axe (A) aligné dans la direction x sur la première direction longitudinale (13), dans lequel la deuxième section (11) est configurée pour pivoter dans un plan vertical (z-y) afin de pencher ou d'incliner l'orientation angulaire (β) de la courroie s'étendant dans la seconde direction longitudinale (14) par rapport à la courroie s'étendant dans la première direction longitudinale (13),
le deuxième ajusteur de courroie (26) est configuré pour fournir une première rotation de la courroie (15) au niveau d'une position entre les premier et second rouleaux d'extrémité (35, 45) pour ajuster l'orientation angulaire dans le plan vertical de la courroie (15) s'étendant dans la seconde direction longitudinale (14) au niveau de la deuxième section (11) par rapport à la courroie (15) s'étendant dans la première direction longitudinale (13) au niveau de la première section (10) ;
dans lequel l'appareil comprenant en outre une troisième section (12) supportant la courroie (15) pour qu'elle s'étende à partir du premier rouleau d'extrémité (35) jusqu'au second rouleau d'extrémité (45), la troisième section (12) étant positionnée entre et fournissant une liaison physique entre les première et deuxième sections (10, 11), et
dans lequel les première, deuxième et troisième sections (10, 11, 12) comprennent chacune un cadre rigide pour monter respectivement les premier et second rouleaux d'extrémité (35, 45), les rouleaux de déviation (38, 39, 41 à 44, 46 à 50) de courroie et les ajusteurs de courroie (25, 26, 22, 23, 24).

2. Appareil selon la revendication 1 comprenant en outre un troisième ajusteur de courroie (22) qui est différent du deuxième ajusteur de courroie (26) pour lever et abaisser dans un plan vertical la courroie (15) au niveau de la deuxième section (11) par rapport à la courroie (15) au niveau de la première section (10).

3. Appareil selon les revendications 1 ou 2 comprenant en outre un quatrième ajusteur de courroie (23) pour ajuster latéralement une position de la courroie (15) s'étendant au niveau de la deuxième section (11) dans un plan horizontal par rapport au premier rouleau d'extrémité (35) et dans une direction alignée sur la première direction longitudinale (13) de façon à aligner la courroie (15) au niveau de la deuxième section (11) par rapport au premier rouleau d'extrémité (35).

4. Appareil selon une quelconque revendication précédente comprenant en outre un cinquième ajusteur de courroie (24) pour ajuster un angle auquel une surface de contact avec un matériau (29) faisant face généralement vers le haut de la courroie (15) au niveau de la deuxième section (11) s'étend dans une direction dans le sens de la largeur de la courroie au niveau de la deuxième section (11) par rapport à un plan horizontal.

5. Appareil selon la revendication 4 dans lequel les premier, deuxième, troisième, quatrième et cinquième ajusteurs de courroie (25, 26, 22, 23, 24) sont tous séparés et supplémentaires les uns par rapport aux autres.

6. Appareil selon une quelconque revendication précédente dans lequel le deuxième ajusteur de courroie (26) comprend au moins une interface annulaire agissant au niveau des rouleaux de déviation (43, 44, 46 à 48), du second rouleau d'extrémité (45) et/ou de la deuxième section (11) pour faire tourner lesdits rouleaux de déviation (43, 44, 46 à 48), le second rouleau d'extrémité (45) et/ou la deuxième section (11) autour d'un axe (A) aligné à peu près parallèle à un axe longitudinal de la première section (10).

7. Appareil selon la revendication 2 dans lequel le troisième ajusteur de courroie (22) comprend au moins une interface annulaire positionnée entre les première et troisième sections (10, 12) pour faire pivoter les deuxième et troisième sections (11, 12) autour d'un axe de pivotement (B) s'étendant à travers la première section (10).

8. Appareil selon une quelconque revendication précédente dans lequel le quatrième ajusteur de courroie (23) comprend au moins un actionneur linéaire pour ajuster une longueur de la troisième section (12) pour amener la deuxième section (11) à bouger jusqu'au et à partir du premier rouleau d'extrémité (35) dans la direction longitudinale de la courroie (15) au niveau de la première section (10).

9. Appareil selon une quelconque revendication précédente lorsqu'elle dépend de la revendication 3 dans lequel le cinquième ajusteur de courroie (24) comprend au moins une interface annulaire agissant et configurée pour faire pivoter un axe de rotation du second rouleau d'extrémité (45) pour déterminer un alignement angulaire de la surface de contact avec un matériau (29) de la courroie (15) au niveau de la deuxième section (11) dans une direction dans le sens de la largeur de la courroie (15) au niveau de la deuxième section (11).

10. Appareil selon une quelconque revendication précédente dans lequel la courroie (15) est une courroie sans fin, continue et les première et deuxième sections (10, 11) comprennent chacune une paire respective de premier et second rouleaux d'extrémité (35, 45) pour supporter la courroie (15) pour qu'elle s'étende dans les première et seconde directions longitudinales (13, 14), une surface de contact avec un matériau (29) de la courroie (15) étant alignée pour faire face généralement vers le haut au niveau des première et deuxième sections (10, 11) entre les paires respectives de premier et second rouleaux d'extrémité (35, 45).

11. Ensemble courroie transporteuse permettant de déplacer un matériau entre des emplacements, l'ensemble comprenant au moins un de l'appareil selon une quelconque revendication précédente.

12. Procédé de transport de matériau avec l'appareil selon l'une quelconque des revendications 1-10 pour un déplacement à partir d'un premier emplacement jusqu'à un second emplacement, le procédé comprenant :
une commande d'un parcours d'une courroie (15) transporteuse pour qu'elle s'étende dans une première direction longitudinale (13) au niveau d'une première section (10) terminée par au moins un premier rouleau d'extrémité (35) ;
une commande d'un parcours de la courroie (15) transporteuse pour qu'elle s'étende dans une seconde direction longitudinale (14) au niveau d'une deuxième section (11) terminée par au moins un second rouleau d'extrémité (45), la seconde direction longitudinale (14) étant alignée transversale ou généralement perpendiculaire à la première direction (10) ;
une déviation de la courroie (15) pour qu'elle s'étende à partir de la première direction longitudinale (10) jusqu'à la seconde direction longitudinale (14) par une pluralité de rouleaux de déviation (38, 39, 41 à 44, 46 à 50) de courroie positionnés dans la direction de parcours de courroie entre les premier et second rouleaux d'extrémité (35, 45);
un décalage de la courroie (15) s'étendant dans la seconde direction longitudinale (14) au niveau de la deuxième section (11) par rapport à la courroie (15) s'étendant dans la première direction longitudinale (13) au niveau de la première section (10) autour d'un axe de décalage pour ajuster une orientation angulaire dans un plan horizontal entre la courroie (15) s'étendant dans les première et seconde directions longitudinales (13, 14) au niveau des première et deuxième sections (10, 11) respectives ;
une rotation de la courroie (15) au niveau d'une position entre les premier et second rouleaux d'extrémité (35, 45) via un deuxième ajusteur de courroie (26) pour ajuster une orientation angulaire dans un plan vertical de la courroie (15) s'étendant dans la seconde direction longitudinale (14) au niveau de la deuxième section (11) par rapport à la courroie (15) s'étendant dans la première direction longitudinale (13) au niveau de la première section (10).
